# EUROPEAN PATENT SPECIFICATION

(11) **EP 2 800 874 B1**
(45) Date of publication and mention of the grant of the patent: **24.02.2016**
(21) Application number: 13707597.4
(22) Date of filing: 25.02.2013
(51) Int. Cl.: F01D 5/14, F01D 5/18, G01B 11/14, G01B 11/26, G01B 11/24, F01D 5/00

(54) **METHOD FOR CHECKING COOLING HOLES OF A GAS TURBINE BLADE**
VERFAHREN ZUR ÜBERPRÜFUNG VON KÜHLUNGSÖFFNUNGEN EINER GASTURBINENSCHAUFEL
PROCÉDÉ POUR VÉRIFIER LES TROUS DE REFROIDISSEMENT D'UNE AUBE DE TURBINE À GAZ

(30) Priority: 29.02.2012 CN 201210050578
(43) Date of publication of application: 12.11.2014
(73) Proprietor: Siemens Aktiengesellschaft, 80333 München (DE)
(72) Inventor: JIANG, Tao, Shanghai 201100 (CN); LI, Hong Tao, Beijing 200240 (CN); NEUENHAHN, Thomas, 45701 Herten (DE)
(74) Representative: Isarpatent
(86) International application number: PCT/EP2013/053645
(87) International publication number: WO 2013/127710

(56) References cited:
- EP-A1- 1 350 860
- EP-A1- 1 734 226
- EP-A2- 1 880 793
- WO-A1-2006/106061
- US-A1- 2002 076 097
- US-B1- 7 810 385

## Description

### Technical field

The present invention relates to a method for checking cooling holes of a gas turbine blade.

### Background art

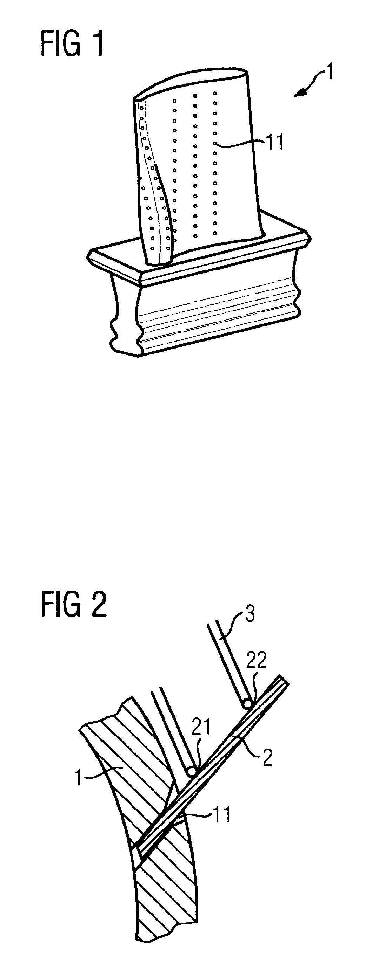

Stationary blades or rotor blades of gas turbines often operate in conditions of high temperature and pressure, and the various dimensions thereof are crucial for a gas turbine to operate well. However, because they operate for long periods under heavy loads in conditions of several hundred or even over a thousand degrees, changes will occur in the dimensions of these blades due to wear. This is particularly true in the case of cooling holes 11 of the gas turbine blade shown in Fig. 1; these holes are designed to provide channels for cooling fluid in the inner cavity of the blade, so as to protect the blades and guarantee their performance and service life. These cooling holes are often of small dimensions, and must satisfy very exacting requirements in terms of position and angle of inclination, etc. Therefore during manufacture or maintenance, a check must be performed to determine whether the internal dimension parameters of components meet the design requirements, in order to determine whether they are serviceable.

At the present time, measurement of the position, dimensions and shape of gas turbine blades is usually carried out using a measuring probe and a coordinate-measuring machine (CMM). For instance, when using the measuring probe 2 shown in Fig. 2 to measure the diameter of a cooling hole 11, measuring probes 2 of different diameters are inserted into the cooling holes separately, and the median of the diameter of the thickest probe that can be inserted into the cooling hole and that of the thinnest probe that cannot be inserted therein is taken to be the measured diameter of the cooling hole. When measuring the angle of inclination of the cooling hole, a probe 3 of the CMM is used to measure two points, 21 and 22, on the thickest measuring probe that can be inserted into the measuring hole, and the angle of inclination is calculated using the coordinates of these points. Since the cooling holes are of small dimensions, have a complex structure in practice and continuously varying angles of inclination, while the measuring probe 2 is ductile, these measuring methods have a low level of accuracy, and typically cannot satisfy all checking requirements.

US patent US7810385B1 has disclosed a method for generating a real three-dimensional model by scanning a gas turbine blade with white light, in order to determine the remaining service life of the gas turbine blade. However, such a method is capable of checking the surface condition of the gas turbine blade only, and not the cooling holes of the gas turbine blade.

Also EP 1 880 793 has disclosed a method for repairing a damaged section of a turbine blade including the step of injecting a filler material into the blade plenum.

The method of computed tomography is also used in the laboratory to measure the shape of gas turbine blades. Although this method gives improved accuracy of measurement, and allows cooling holes of gas turbine blades to be measured, it involves complex equipment, is time-consuming and expensive, and is not suitable for checking large quantities of components in the factory.

### Content of the invention

The object of the present invention is to provide a method for checking cooling holes of a gas turbine blade. The method comprises, in sequence: step 1: injecting a liquid plastic material into a cooling hole of a gas turbine blade; step 2: stopping the flow of the liquid plastic material, and curing the liquid plastic material to form a model; step 3: separating the model from the gas turbine blade; step 4: scanning the model. By scanning the model, the cooling hole of the gas turbine blade can be checked, so as to obtain more data about the position, dimensions and shape thereof, while improving the accuracy and efficiency of measurement.

According to one aspect of the present invention, after step 4 the method further comprises: step 5: comparing data about the model, obtained by scanning, with data about a standard model of the gas turbine blade. By making a comparison with the data about the standard model, a judgment can be made as to whether the cooling hole of the gas turbine blade meets the design requirements.

According to another aspect of the present invention, steps 1 to 4 are performed on multiple cooling holes at the same time. Obtaining and scanning models of multiple cooling holes at the same time allows the efficiency of checking to be further improved.

According to another aspect of the present invention, the data about the standard model in the method is obtained by performing steps 1 to 4 in sequence. By making a comparison with data about the standard model obtained by the same method, the efficiency of measurement and the accuracy of comparison can be improved.

According to another aspect of the present invention, before step 1 the method further comprises: step 11: covering the inner wall of the cooling hole with a layer of mold-release coating. The mold-release coating can facilitate the release of the liquid plastic material from the mold after curing.

According to another aspect of the present invention, step 3 in the method comprises, in sequence: step 31: releasing the model from the mold in sections; step 32: connecting the various sections to re-form the model. Splitting into sections can facilitate the release of the model from the mold.

According to another aspect of the present invention, scanning is performed by white-light interferometry or laser light. The use of white-light interferometry or laser light to perform scanning makes the implementation of the present method extremely reliable.

Preferred embodiments are described below in a clear and easily understandable way with reference to the accompanying drawings, in order to further explain the above characteristics, technical features, advantages and embodiments of the method for checking cooling holes of a gas turbine blade.

### Description of the accompanying drawings

Fig. 1 shows a gas turbine blade to be checked, the example of a stationary blade being used here;
Fig. 2 shows schematically an existing method for checking cooling holes of a gas turbine blade;
Fig. 3 is a schematic diagram showing the method of the present invention being used to check cooling holes of a gas turbine blade.
Fig. 4 shows the model in Fig. 3.

### Explanation of labels

- 1: gas turbine blade
- 11: cooling hole of gas turbine blade
- 2: measuring probe
- 21, 22: points
- 3: probe
- 4: model
- 41: end portion of model
- 42: main body of model

### Particular embodiments

In order that the technical features, object and effects of the present invention may be understood more clearly, particular embodiments of the present invention will now be described with reference to the accompanying drawings, in which identical labels indicate identical parts or parts that are similar in structure but identical in function.

In order that the drawings may appear simple and clear, only those parts which are relevant to the present invention are shown schematically therein; these do not represent the actual structure thereof as a product. Furthermore, in order that the drawings may appear simple and clear for ease of understanding, if there are parts with the same structure or function in certain drawings, only one of these is drawn schematically or marked.

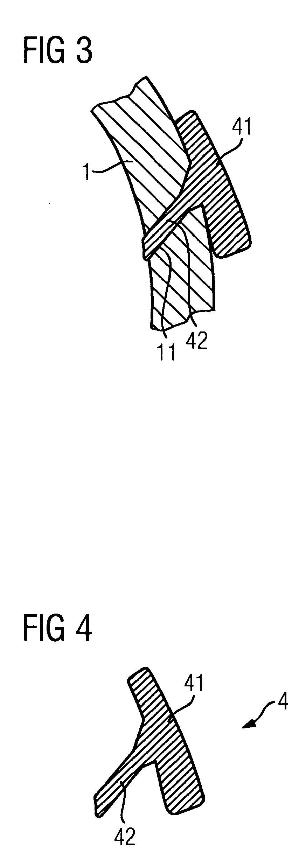

Fig. 3 uses a sectional view to show the method of the present invention for checking cooling holes of a gas turbine blade. Those skilled in the art will understand that the method of the present invention is applicable not only to cooling holes of a stationary blade of a gas turbine, but also similarly applicable to cooling holes of a rotor blade. The method comprises the following steps, in sequence:
step 1: injecting a liquid plastic material into a cooling hole 11 of a gas turbine blade 1, wherein the plastic material can be many existing resin materials;
step 2: stopping the flow of the liquid plastic material, and curing the liquid plastic material to form a model 4, wherein the model 4 can comprise a model end portion 41 for facilitating mold release and a model main body 42 for reflecting the condition of the cooling hole;
step 3: separating the model 4 from the gas turbine blade 1, that is to say, pulling the model main body 42 out by clutching the model end portion 41;
step 4: scanning the model 4, wherein scanning is preferably performed by white-light interferometry or laser light.

Those skilled in the art will understand that various existing methods can be used to stop the flow of the liquid plastic material, for example by providing packing in the inner cavity of the gas turbine blade 1.

According to another solution of the method of the present invention, the following may be included after step 4:
step 5: comparing data about the model 4, obtained by scanning, with data about a standard model of the gas turbine blade 1, so as to find out relevant parameters of the cooling hole 11 of the gas turbine blade 1, and in turn make a judgment as to whether the internal dimension parameters thereof meet the design requirements, to determine whether they are acceptable. Such a comparison can be accomplished by manually comparing readings obtained by scanning with design requirement values; alternatively, automatic comparison can be accomplished using computer technology, thereby improving efficiency. Those skilled in the art will also understand that the standard model data can also be obtained by performing steps 1 to 4 in sequence on a cooling hole 11 of a standard gas turbine blade 1.

According to another solution of the method of the present invention, steps 1 to 4 can be performed on multiple cooling holes 11 at the same time. For example, steps 1 to 4 can be performed on a row or column of cooling holes with the same angle of inclination at the same time. In this case, the model end portions 41 corresponding to the multiple main model bodies 42 remain connected together throughout the processes of curing, mold release and scanning. This allows models of multiple cooling holes to be obtained and scanned at the same time, so as to further improve the efficiency of checking.

According to another solution of the method of the present invention, the following is included before step 1 in order to facilitate mold release further:
step 11: covering the inner wall of the cooling hole 11 with a layer of mold-release coating.

According to another solution of the method of the present invention, in the case where mold release from a cooling hole of a gas turbine blade is difficult or impossible to accomplish in a single operation, step 3 of the method of the present invention may comprise, in sequence:
step 31: releasing the model 4 from the mold in sections;
step 32: connecting the various sections to re-form the model 4.

The series of detailed descriptions set out above are merely specific descriptions of feasible embodiments of the present invention, and are not intended to limit the scope of protection thereof. All equivalent embodiments or modifications made without departing from the artistic spirit of the present invention should be included within the scope of protection thereof.

## Claims

1. A method for checking cooling holes of a gas turbine blade, comprising in sequence:
step 1: injecting a liquid plastic material into a cooling hole (11) of a gas turbine blade (1);
step 2: stopping the flow of the liquid plastic material, and curing the liquid plastic material to form a model (4);
step 3: separating the model (4) from the gas turbine blade (1);
step 4: scanning the model (4).

2. The method as claimed in claim 1, wherein the following is also included after step 4:
step 5: comparing data about the model (4), obtained by scanning, with data about a standard model of the gas turbine blade (1).

3. The method as claimed in claim 1, wherein steps 1 to 4 are performed on multiple cooling holes (11) at the same time.

4. The method as claimed in claim 2, wherein the data about the standard model is obtained by performing steps 1 to 4 in sequence.

5. The method as claimed in claim 1, wherein the following is also included before step 1:
step 11: covering the inner wall of the cooling hole (11) with a layer of mold-release coating.

6. The method as claimed in claim 1, wherein step 3 comprises, in sequence:
step 31: releasing the model (4) from the mold in sections;
step 32: connecting the various sections to re-form the model (4).

7. The method as claimed in any one of the above claims, wherein scanning is performed by white-light interferometry or laser light.

## Patentansprüche

1. Verfahren zur Überprüfung von Kühlungsöffnungen einer Gasturbinenschaufel mit der folgenden Abfolge:
Schritt 1: Einspritzen eines flüssigen Kunststoffmaterials in eine Kühlungsöffnung (11) einer Gasturbinenschaufel (1),
Schritt 2: Anhalten der Strömung des flüssigen Kunststoffmaterials und Aushärten des flüssigen Kunststoffmaterials zum Bilden eines Modells (4);
Schritt 3: Trennen des Modells (4) von der Gasturbinenschaufel (1);
Schritt 4: Abtasten des Modells (4).

2. Verfahren nach Anspruch 1, wobei folgende Schritte nach Schritt 4 erfolgen:
Schritt 5: Vergleichen von Daten über das Modell (4), die durch das Abtasten erhalten wurden, mit Daten über ein Standardmodell der Gasturbinenschaufel (1).

3. Verfahren nach Anspruch 1, wobei die Schritte 1 bis 4 an mehreren Kühlungsöffnungen (11) gleichzeitig durchgeführt werden.

4. Verfahren nach Anspruch 2, wobei die Daten über das Standardmodell durch Ausführen der Schritte 1 bis 4 in Abfolge erhalten werden.

5. Verfahren nach Anspruch 1, wobei folgende Schritte vor Schritt 1 erfolgen:
Schritt 11: Abdecken der Innenwand der Kühlungsöffnung (11) mit einer Schicht aus einer Gussform-Ablösebeschichtung.

6. Verfahren nach Anspruch 1, wobei Schritt 3 in Abfolge umfasst:
Schritt 31: Lösen des Modells (4) aus der Form in Abschnitten;
Schritt 32: Verbinden der verschiedenen Abschnitte zum Umformen des Modells (4).

7. Verfahren nach einem der vorstehenden Ansprüche, wobei das Abtasten mithilfe der Weißlicht-Interferometrie oder Laserlicht durchgeführt wird.

## Revendications

1. Procédé pour vérifier des trous de refroidissement d'une aube de turbine à gaz, comprenant, successivement :
étape 1 : injecter une matière plastique liquide dans un trou de refroidissement (11) d'une aube de turbine à gaz (1) ;
étape 2 : interrompre l'écoulement de matière plastique liquide, et faire durcir la matière plastique liquide pour former un modèle (4) ;
étape 3 : séparer le modèle (4) de l'aube de turbine à gaz (1) ;
étape 4 : effectuer un balayage numérique du modèle (4).

2. Procédé selon la revendication 1, dans lequel l'étape suivante est également incorporée après l'étape 4 :
étape 5 : comparer les données relatives au modèle (4), obtenues par balayage numérique, avec des données concernant un modèle standard de l'aube de turbine à gaz (1).

3. Procédé selon la revendication 1, dans lequel les étapes 1 à 4 sont effectuées en même temps sur plusieurs trous de refroidissement (11).

4. Procédé selon la revendication 2, dans lequel les données relatives au modèle standard sont obtenues en effectuant les étapes 1 à 4 successivement.

5. Procédé selon la revendication 1, dans lequel l'étape suivante est également incorporée avant l'étape 1 :
étape 11 : couvrir la paroi interne du trou de refroidissement (11) avec une couche de revêtement de protection contre la moisissure.

6. Procédé selon la revendication 1, dans lequel l'étape 3 comprend, en succession :
étape 31 : démouler le modèle (4) du moule par sections ;
étape 32 : connecter les diverses sections pour reformer le modèle (4).

7. Procédé selon l'une quelconque des revendications précédentes, dans lequel le balayage numérique est effectué par interférométrie à lumière blanche ou par lumière laser.
